# EUROPEAN PATENT SPECIFICATION

(11) **EP 4 019 406 B1**
(45) Date of publication and mention of the grant of the patent: **11.10.2023**
(21) Application number: 21210106.7
(22) Date of filing: 24.11.2021
(51) Int. Cl.: B64D 27/24

(54) **MULTICOPTER WITH PROPULSION SYSTEM**
MULTIKOPTER MIT ANTRIEBSSYSTEM
MULTICOPTÈRE AVEC SYSTÈME DE PROPULSION

(30) Priority: 22.12.2020 JP 2020212817
(43) Date of publication of application: 29.06.2022
(73) Proprietor: HONDA MOTOR CO., LTD., Minato-ku Tokyo 107-8556 (JP)
(72) Inventor: KITA, Akinori, Saitama, 351-0193 (JP); MATSUMOTO, Takeshi, Saitama, 351-0193 (JP); TSUTSUMI, Daiko, Saitama, 351-0193 (JP)
(74) Representative: Weickmann & Weickmann PartmbB

(56) References cited:
- WO-A1-2022/002319
- WO-A1-2022/069540
- US-A1- 2010 126 178
- US-A1- 2016 023 773
- US-A1- 2019 061 924
- US-A1- 2020 153 252
- Anonymous: "about gas trubine engine structure and torque", , 23 April 2016 (2016-04-23), pages 1-6, XP055979965, Retrieved from the Internet: URL:https://web.archive.org/web/2016042306 3549/https://turbotrain.net/en/whatsgastur bine.htm [retrieved on 2022-11-10]

## Description

### BACKGROUND OF THE INVENTION

### Field of the Invention

The present invention relates to a multicopter equipped with an aircraft propulsion system.

### Description of Related Art

Conventionally, there are known aircraft propulsion systems in which a plurality of engines are attached to an aircraft body and a generator is connected to the engines (see, for example, Cited Document 1 (United States Patent No. 8727271) and Cited Document 2 (United States Patent No. 9493245)). In the aircraft propulsion system, power supplied by a generator and/or power supplied by a battery are supplied to motors and the motors drive a plurality of rotors. Further, the aircraft propulsion system defines the division between power supplied by the generator and power supplied by the battery in accordance with a flight situation.

US 2010/126 178 A1 shows a fixed-wing passenger aircraft with power sharing with one engine shut down in state with low demand periods.

Post-published WO 2022/002 319 A1 relates to fixed-wing aircrafts and helicopters.

US 2016/023 773 A1 discloses a fixed-wing aircraft designed for vertical takeoff only.

Post-published WO 2022/069 540 A1 discloses a fixed-wing aircraft and a gyrocopter.

US 2019/061 924 A1 discloses a multicopter.

### SUMMARY OF THE INVENTION

However, in the above-mentioned aircraft propulsion system, the improvement of power generation efficiency has not been sufficiently studied.

The present invention has been made in consideration of the above circumstances and an objective of the present invention is to provide a multicopter equipped with an aircraft propulsion system capable of improving power generation efficiency.

The present invention provides a multicopter equipped with an aircraft propulsion system according to claim 1.

Preferred embodiments are disclosed in the dependent claims.

### BRIEF DESCRIPTION OF THE DRAWINGS

FIG. 1 is a diagram schematically showing an aircraft 1 equipped with an aircraft propulsion system.
FIG. 2 is a diagram showing an example of a functional configuration of the aircraft 1.
FIG. 3 is a diagram for describing an efficient operating range of a GT 60.
FIG. 4 is a diagram for describing a flight state of the aircraft 1.
FIG. 5 is a flowchart showing an example of a flow of a process executed by a control device 100.
FIG. 6 is a flowchart showing another example of the flow of the process executed by the control device 100.
FIG. 7 is a flowchart (Part 1) showing an example of a flow of a process executed by the aircraft 1 after takeoff and before landing.
FIG. 8 is a flowchart (Part 2) showing an example of a flow of a process executed by the aircraft 1 after takeoff and before landing.
FIG. 9 is a diagram showing an example of changes in an operating state of the GT 60 and required output from the time when the aircraft 1 takes off to the time when the aircraft 1 lands.
FIG. 10 is a diagram for comparing power required for a flight state of an aircraft having fixed wings with power required for a flight state of an aircraft having rotary wings.
FIG. 11 is a flowchart showing an example of a flow of a process executed by a control device 100 of a second embodiment.
FIG. 12 is a flowchart showing another example of the flow of the process executed by the control device 100 of the second embodiment.
FIG. 13 is a diagram showing an example of changes in an operating state of a GT 60 and power from the time when an aircraft 1 takes off to the time when the aircraft 1 lands.

### DETAILED DESCRIPTION OF THE INVENTION

Hereinafter, embodiments of an aircraft propulsion system of the present invention will be described with reference to the drawings.

### <First embodiment>

### [Overall configuration]

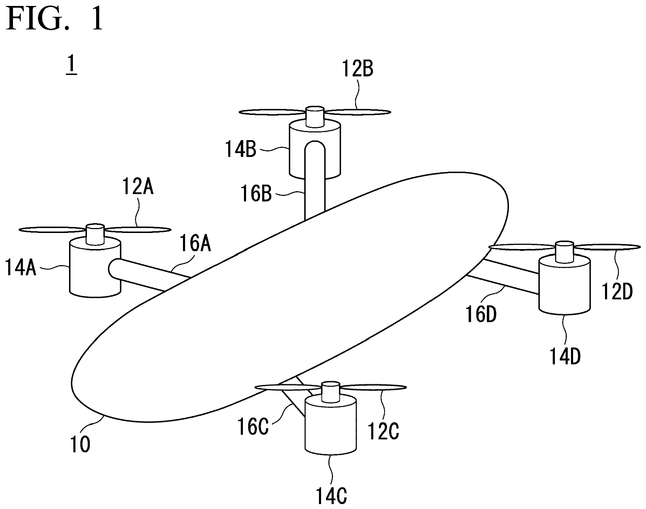

FIG. 1 is a diagram schematically showing an aircraft 1 equipped with an aircraft propulsion system. The aircraft 1 includes an aircraft body 10, a plurality of rotors 12A to 12D, a plurality of motors 14A to 14D, and arms 16A to 16D. Hereinafter, when the plurality of rotors 12A to 12D are not distinguished from each other, they are referred to as rotors 12. Also, when the plurality of motors 14A to 14D are not distinguished from each other, they are referred to as motors 14. The aircraft 1 may be a manned aircraft or an unmanned aircraft. The aircraft 1 is a multicopter shown in FIG. 1.

The rotor 12A is attached to the aircraft body 10 via the arm 16A. A motor 14A is attached to a base (a rotating shaft) of the rotor 12A. The motor 14A drives the rotor 12A. The motor 14A is, for example, a brushless direct current (DC) motor. The rotor 12A is a fixed wing of a blade that rotates around an axis parallel to a direction of gravity when the aircraft 1 is in a horizontal attitude. The rotors 12B to 12D, the arms 16B to 16D, and the motors 14B to 14D also have functional configurations as described above and thus the description thereof will be omitted.

By rotating the rotor 12 in accordance with a control signal, the aircraft 1 flies in a desired flight state. The control signal is a signal for controlling the aircraft 1 based on an operation of an operator or an instruction in automatic control. For example, the rotor 12A and the rotor 12D rotate in a first direction (for example, a clockwise direction) and the rotor 12B and the rotor 12C rotate in a second direction (for example, a counterclockwise direction), so that the aircraft 1 flies. In addition to the rotors 12 described above, an auxiliary rotor (not shown) for maintaining an attitude or for horizontal propulsion and the like may be provided.

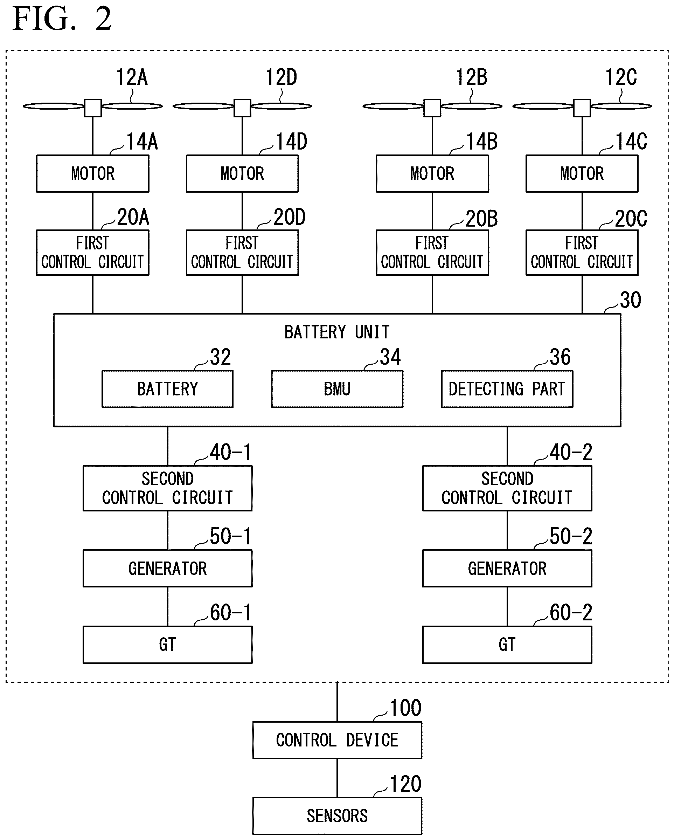

FIG. 2 is a diagram showing an example of a functional configuration of the aircraft 1. In addition to the configuration shown in FIG. 1, the aircraft 1 includes, for example, first control circuits 20A, 20B, 20C, and 20D, a battery unit 30, second control circuits 40-1 and 40-2, generators 50-1 and 50-2, and gas turbine engines (hereinafter referred to as "GTs") 60-1 and 60-2. A configuration associated with the number "1" added to the hyphen subsequent to the reference numeral is a first configuration corresponding to the rotor 12A, the rotor 12D, the motor 14A, the motor 14D, the first control circuit 20A, and the first control circuit 20D. A configuration associated with the number "2" added to the hyphen subsequent to the reference numeral is a second configuration corresponding to the rotor 12B, the rotor 12C, the motor 14B, the motor 14C, the first control circuit 20B, and the first control circuit 20C. Hereinafter, the first configuration will be described as a representative. Because the second configuration is similar to the first configuration, the description of the second configuration will be omitted.

The first control circuit 20A is a power drive unit (PDU) including a drive circuit such as an inverter. The first control circuit 20A supplies the motor 14A with power obtained by converting power supplied by the battery unit 30 according to switching or the like. The first control circuit 20D is a PDU like the first control circuit 20A and supplies power supplied by the battery unit 30 to the motor 14D. The motor 14A causes the rotor 12A to be driven and the motor 14D causes the rotor 12D to be driven.

The battery unit 30 includes, for example, a battery 32, a battery management unit (BMU) 34, and a detecting part 36. The battery 32 is, for example, an assembled battery in which a plurality of battery cells are connected in series, parallel, or series-parallel. The battery cell constituting the battery 32 is, for example, a secondary battery capable of iterating charging and discharging such as a lithium-ion battery (LIB) or a nickel hydride battery.

The BMU 34 performs the cell balancing, the detection of an abnormality of the battery 32, the derivation of a cell temperature of the battery 32, the derivation of a charge/discharge current of the battery 32, the estimation of a state of charge (SOC) of the battery 32, and the like. The detecting part 36 includes a voltage sensor, a current sensor, a temperature sensor, and the like for measuring a state of charge of the battery 32. The detecting part 36 outputs measurement results such as a measured voltage, a measured current, and a measured temperature to the BMU 34,

The aircraft 1 may include a plurality of battery units 30. For example, the battery unit 30 corresponding to each of the first configuration and the second configuration may be provided. Although the power generated by the generator 50 is supplied to the battery 32 in the present embodiment, the present invention is not limited thereto. The power generated by the generator 50 may be supplied to the first control circuit 20 and the motor 14 without involving the battery 32 (or selectively via the battery 32).

The second control circuit 40-1 is a power conditioning unit (PCU) including a converter and the like. The second control circuit 40-1 converts AC power generated by the generator 50-1 into DC power and supplies the converted power to the battery 32 and/or the first control circuit 20.

The generator 50-1 is connected to an output shaft of the GT 60-1. The generator 50-1 is driven by the operation of the GT 60-1 and AC power is generated according to the above driving. The generator 50-1 may be connected to the output shaft of the GT 60-1 via a deceleration mechanism. The generator 50-1 functions as a motor. When the supply of fuel to the GT 60-1 is stopped, the GT 60-1 is allowed to rotate (idle) so that it can be operated. At this time, the second control circuit 40-1 takes out power from the battery 32 side and allows the generator 50-1 to function as the motor. Instead of the above functional configuration, a starter motor may be connected to the output shaft of the GT 60-1 so that the starter motor may be able to operate the GT 60-1.

The GT 60-1 is, for example, a turboshaft engine. The GT 60-1 includes, for example, an intake port (not shown), a compressor, a combustion chamber, a turbine, and the like. The compressor compresses the intake air suctioned from the intake port. The combustion chamber is located downstream of the compressor and burns a gas that is a mixture of compressed air and fuel to generate a combustion gas. The turbine is connected to the compressor and is rotated integrally with the compressor by a force of the combustion gas. The output shaft of the turbine rotates due to the above rotation, so that the generator 50 connected to the output shaft of the turbine operates.

The control device 100 is implemented by, for example, a hardware processor such as a central processing unit (CPU) executing a program (software). Some or all of functions of the control device 100 may be implemented by hardware (including a circuit unit; circuitry) such as a large-scale integration (LSI) circuit, an application specific integrated circuit (ASIC), a field-programmable gate array (FPGA), or a graphics processing unit (GPU) or may be implemented by software and hardware in cooperation. The program may be prestored in a storage device (a storage device including a non-transitory storage medium) such as a hard disk drive (HDD) or a flash memory of the control device 100 or may be stored in a removable storage medium such as a DVD or CD-ROM and installed in the HDD or the flash memory of the control device 100 when the storage medium (the non-transitory storage medium) is mounted in a drive device.

Various types of sensors 120 include, for example, a rotational speed sensor, a plurality of temperature sensors, a plurality of pressure sensors, a lubricating oil sensor, an altitude sensor, a gyro sensor, and the like. The rotational speed sensor detects a rotational speed of the turbine. The temperature sensor detects a temperature at a position near the intake port of the GT 60 and/or a temperature at a position immediately downstream of the combustion chamber. The lubricating oil sensor detects a temperature of lubricating oil supplied for a bearing of the GT 60 or the like. The pressure sensor detects a pressure inside a container accommodating the control device 100 and/or a pressure at a position near the intake port of the GT 60. The altitude sensor detects an altitude of the aircraft 1. The gyro sensor detects an attitude of the aircraft body 10.

The control device 100 controls the motor 14, the first control circuit 20, the battery unit 30, the second control circuit 40, the generator 50, the GT 60, and the like, which have been described, based on their operating states or information acquired from the various types of sensors 120. For example, the control device 100 controls each of the above-described functional configurations so that the aircraft 1 is allowed to take off or land or the aircraft 1 is allowed to fly in a prescribed flight state.

The control device 100 controls the aircraft 1 based on flight information. The flight information is, for example, information obtained from the detection results of the various types of sensors 120 and a flight state of the aircraft 1 based on a control signal. When the flight state of the aircraft 1 is a first state after the plurality of GTs 60 operate and the aircraft 1 takes off, the control device 100 causes at least one GT 60 among a plurality of GTs 60 to be stopped, causes the other GTs 60, which have not been stopped, to be operated in an efficient operating range in which the other GTs 60 can efficiently operate (details thereof will be described below), and causes the generator 50 corresponding to another GT 60 to output power. When the flight state of the aircraft 1 is in a second state different from the first state, the control device 100 controls the aircraft 1 by causing a plurality of GTs 60 to be operated.

### [Description of efficient operating range]

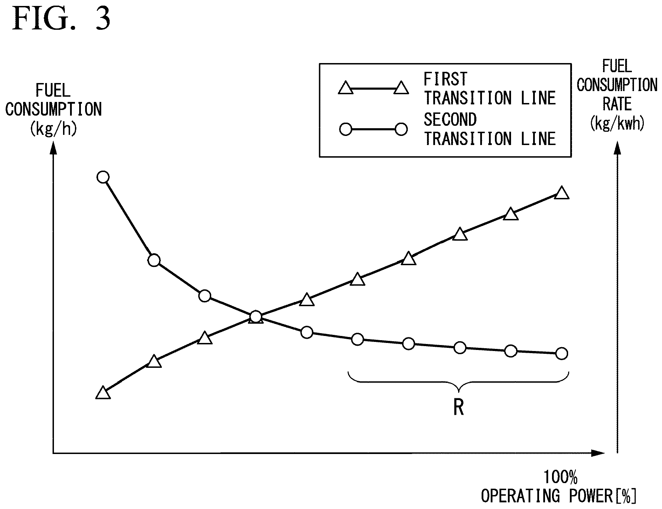

FIG. 3 is a diagram for describing the efficient operating range of the GT 60. FIG. 3 shows a first transition line and a second transition line. The horizontal axis in FIG. 3 shows an output (operating power) [%] of the GT 60. The first transition line shows fuel consumption for each output. Regarding the first transition line, the vertical axis (a first vertical axis on the left side in FIG. 3) represents fuel consumption [kg/h] during a continuous operation for one hour. The first transition line indicates that the efficiency decreases as the slope of the straight line connecting the point of fuel consumption (for example, any point of a mark Δ in FIG. 3) and the origin increases. The first transition line indicates that the efficiency increases as the slope of the straight line connecting the point of fuel consumption (for example, any point of the mark Δ in FIG. 3) and the origin decreases. Although not shown, when the output of the first transition line is zero, the efficiency is offset and becomes a value of zero or more.

The second transition line shows specific fuel consumption (SFC) for each output. Regarding the second transition line, the vertical axis (a second vertical axis on the right side in FIG. 3) represents a fuel consumption rate [kg/kwh]. The SFC indicates a value obtained by dividing the fuel consumption consumed when the GT 60 has continuously operated for one hour by the output and the efficiency increases as the value decreases. The maximum rated power of the GT 60 is shown as 100%.

As indicated by the first transition line and the second transition line, the operating efficiency of the GT 60 decreases as the output of the GT 60 decreases. A maximum efficiency point where the maximum efficiency is high is, for example, a point where the output of the GT 60 is between 95% and 100%. The control device 100 can improve the power generation efficiency by causing the GT 60 to be operated within the efficiency operating range set based on the maximum efficiency point. A range R shown in FIG. 3 is an example of an efficient operating range. The efficient operating range is a range in which the output starts at around 60% and ends at a value of about 95% to 100%.

The maximum efficiency point or efficient operating range is set for each altitude of the aircraft 1 and each temperature of the GT 60. This information is stored in the storage device of the control device 100. The control device 100 identifies the efficient operating range based on the altitude and the temperature with reference to the information stored in the storage device.

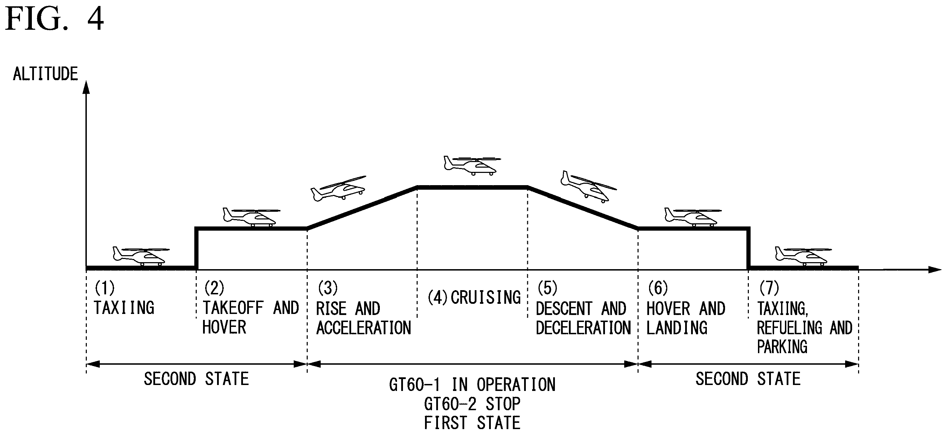

FIG. 4 is a diagram for describing the flight state of the aircraft 1. As shown in FIG. 4, the aircraft 1 performs (1) taxiing, (2) takeoff and hover (hovering), (3) rise and acceleration, and (4) cruising. The aircraft 1 performs (5) descent and deceleration, (6) hover and landing, and (7) taxiing, refueling, and parking. A state in which the aircraft 1 moves in a direction including the horizontal direction after reaching a prescribed altitude is the first state. The first state is, for example, a state in which the aircraft 1 shown in FIG. 4 is cruising or a state in which the aircraft 1 shown in FIG. 4 is rising, accelerating, cruising, descending, and decelerating ((3) to (5)). In the following description, the first state is assumed to be a state in which the aircraft 1 is rising and accelerating, cruising, and descending and decelerating. For example, a state in which the aircraft 1 is taking off or landing, taxiing, refueling, and parking ((1), (2), (6), and (7)) is the second state.

For example, when the aircraft 1 is in a takeoff, hovering, or landing state among the above flight states, the control device 100 causes the GT 60-1 and the GT 60-2 to be operated within the efficient operating range. The power output by the GT 60-1 and the GT 60-2 operating within the efficient operating range is power greater than or equal to the required power in the state in which the aircraft 1 is taking off, hovering, or landing or power close to the required power.

In the above flight states, for example, when the aircraft 1 is rising and accelerating, cruising, or descending and decelerating (when the aircraft 1 is in the first state), the control device 100 causes the GT 60-1 to be operated within the efficient operating range and causes the operation of the GT 60-2 to be stopped. The power output by the GT 60-1 operating within the efficient operating range is power greater than or equal to the required power in the state in which the aircraft 1 is rising and accelerating, cruising, or descending and decelerating or power close to the required power. The GT 60-1 and the GT 60-2 have, for example, specifications that satisfy the above-described conditions.

The required power is power required for the aircraft 1 to transition to the flight state based on the control signal or to maintain the flight state. The control device 100 provides the required power to the motor 14 and the motor 14 drives the rotor 12 based on the required power, thereby controlling the aircraft 1 so that the aircraft 1 is in the flight state based on the control signal. The required power required for the first state is, for example, power less than or equal to power that can be output by the generator 50 corresponding to the other GT 60 in a state in which the other GT 60, which has not been stopped, operates in the efficient operating range. The required power required for the first state is power exceeding power that can be output by the other GT 60 described above, but may be power less than or equal to power that can be supplied by the battery 32. In other words, although the power generated in real time is insufficient, power greater than or equal to the required power is supplied to the motor 14 by supplementing the power from the power prestored in the battery 32. The required power required for the first state can be supplied from the battery 32 when the operations of the GT 60-1 and the GT 60-2 are stopped and power is not supplied to the battery 32.

### [Flowchart (process at time of takeoff)]

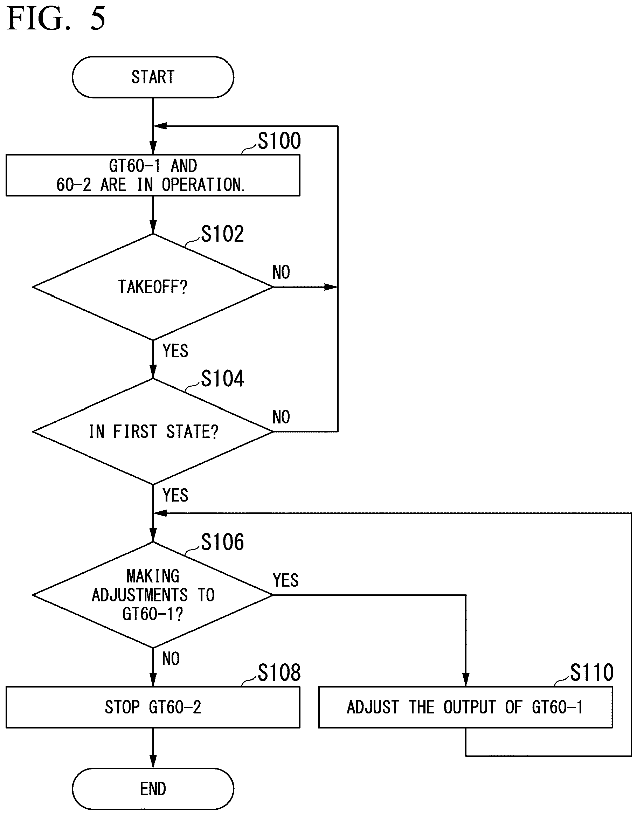

FIG. 5 is a flowchart showing an example of a flow of a process executed by the control device 100. FIG. 5 is an example of a flow of a process executed at the time of takeoff. First, the control device 100 operates the GT 60-1 and the GT 60-2 (step S100). Next, the control device 100 determines whether or not the aircraft 1 has taken off (whether or not the aircraft 1 is in a takeoff state) (step S 102). When the aircraft 1 has not taken off, the process returns to step S 100 and a state in which the GT 60-1 and the GT 60-2 are in operation is maintained.

When the aircraft 1 has taken off, the control device 100 determines whether or not the aircraft 1 is in the first state (step S104). The first state may be, for example, a state in which the GT 60-1 operates within the efficient operating range and therefore it is possible to supply more power than the required power of the aircraft 1 after takeoff.

When the aircraft 1 is in the first state, the control device 100 determines whether or not to adjust the output of the GT 60-1 (step S106). The adjustment indicates that the control device 100 causes the GT 60-1 to be operated within the efficient operating range. For example, the control device 100 determines that it is not necessary to adjust the output of the GT 60-1 when the GT 60-1 is in operation within the efficient operating range. The control device 100 determines that it is necessary to adjust the output of the GT 60-1 when the GT 60-1 is not in operation within the efficient operating range.

When it is determined that an adjustment to the GT 60-1 is not to be made, the control device 100 causes the GT 60-2 to be stopped (step S108). When it is determined that the adjustment to the GT 60-1 is to be made, the control device 100 adjusts the output of the GT 60-1 (step S110) and returns to the processing of step S106. Thereby, the process of the present flowchart ends. The processing of S108 may be executed before the processing of step S106.

As described above, the control device 100 causes the GT 60-2 to be stopped and further causes the GT 60-1 to be operated within the efficient operating range when the aircraft 1 is in the first state after taking off. Thereby, efficient power generation can be performed, so that power generation efficiency can be improved.

### [Flowchart (process at the time of landing)]

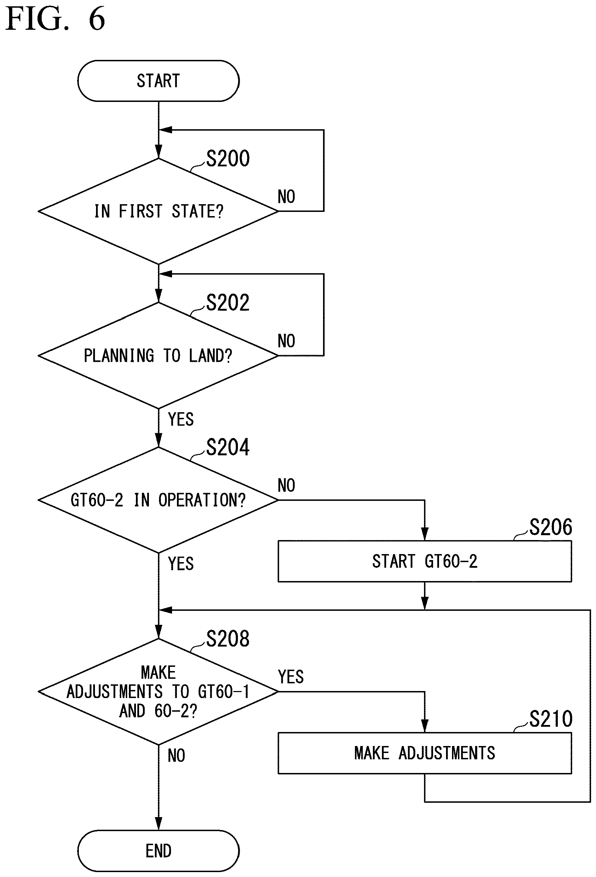

FIG. 6 is a flowchart showing another example of the flow of the process executed by the control device 100. FIG. 6 is an example of the flow of the process executed at the time of landing. First, the control device 100 determines whether or not the aircraft 1 is in the first state (step S200). When the aircraft 1 is in the first state, the control device 100 determines whether or not the aircraft 1 has been scheduled to land (step S202). For example, when the control device 100 acquires a control signal indicating that the aircraft 1 has been scheduled to land, the control device 100 determines that the aircraft 1 has been scheduled to land.

When the aircraft 1 is scheduled to land, the control device 100 determines whether or not the GT 60-2 is in operation (step S204). When the GT 60-2 is not in operation, the control device 100 causes the GT 60-2 to be operated (step S206).

When GT 60-2 is in operation, or after the processing of step S206, the control device 100 determines whether or not to adjust the outputs of the GT 60-1 and the GT 60-2 (step S208). For example, the control device 100 determines that it is not necessary to adjust the outputs of the GT 60-1 and the GT 60-2 when the GT 60-1 and the GT 60-2 are in operation within the efficient operating range. The control device 100 determines that it is necessary to adjust the outputs of the GT 60-1 and the GT 60-2 when the GT 60-1 and the GT 60-2 are not in operation within the efficient operating range.

When it is determined that adjustments to the GT 60-1 and the GT 60-2 are to be made, the control device 100 makes the adjustments to the GT 60-1 and the GT 60-2 (step S210). The adjustments indicate that the control device 100 causes the GT 60-1 or the GT 60-2 to be operated within the efficient operating range. If there is a difference between the required power required for a flight and the power generated by the GT 60-1 and the GT 60-2 due to the above adjustment, the battery 32 may provide power associated with the difference. Subsequently, the aircraft 1 lands. Thereby, the process of the present flowchart ends.

As described above, when the aircraft 1 lands, the control device 100 causes the GT 60-1 and the GT 60-2 to be operated within the efficient operating range and causes the aircraft 1 to land. Thereby, power generation efficiency can be improved and a stable flight can be implemented.

As described above, the control device 100 causes the aircraft 1 to fly by causing the GT 60-1 to be operated within the efficient operating range and causing the GT 60-2 to be stopped when the aircraft 1 is rising and accelerating, cruising, or descending and decelerating. Thereby, it is possible to improve power generation efficiency.

### [Flowchart (process after takeoff and before landing/Part 1)]

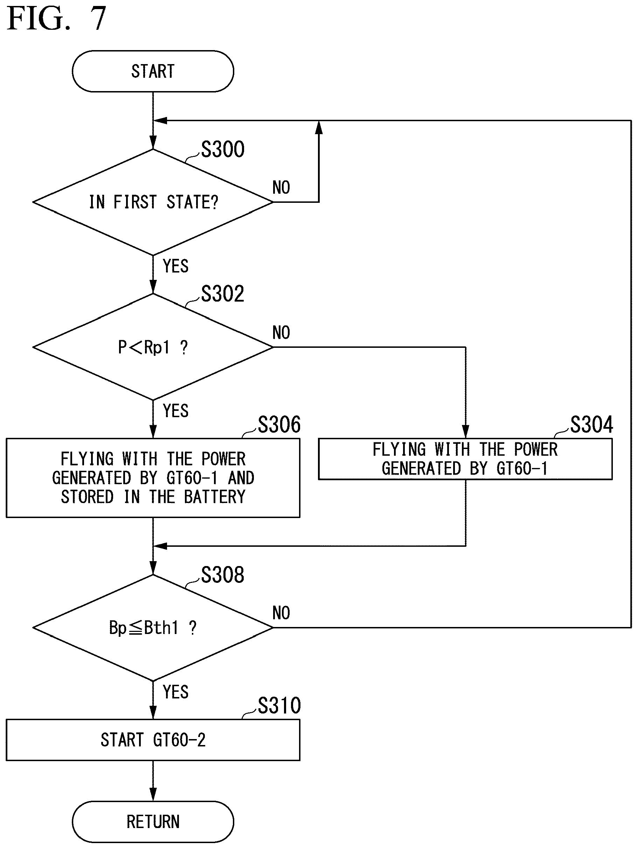

FIG. 7 is a flowchart (Part 1) showing an example of a flow of a process executed by the aircraft 1 after takeoff and before landing. First, the control device 100 determines whether or not the state is the first state (step S300). In the first state, it is assumed that the GT 60-2 is not in operation.

In the case of the first state, the control device 100 determines whether or not power P generated according to the operation of the GT 60-1 is less than required power Rp (step S302). When the power P is not less than the required power Rp, the control device 100 supplies power generated by the GT 60-1 to the motor 14 via the battery 32. Thereby, the aircraft 1 flies with the power generated by the GT 60-1 (step S304). When there is surplus power obtained by subtracting the required power Rp from the power P, the surplus power is stored in the battery 32 and the amount of power stored in the battery 32 tends to increase.

When the power P is less than the required power Rp, the control device 100 substantially supplies the power generated by the GT 60-1 and power prestored in the battery 32 to the motor 14. Thereby, the aircraft 1 flies with the power generated by the GT 60-1 and the power stored in the battery 32 (step S306). In this case, the amount of power stored in the battery 32 tends to decrease. That is, the battery 32 compensates for a difference in power between the required power and the power output by the generator 50 with the power that has been prestored and supplies the required power to the motor 14, so that the amount of power of the battery 32 decreases.

Next, the control device 100 determines whether or not power Bp stored in the battery 32 is less than or equal to a threshold value Bth1 (step S308). The threshold value Bth1 is a lower limit value of the power to be stored in the battery 32. The threshold value Bth1 is, for example, a lower limit value of a state of charge (SOC). In this case, in step S308, it is determined whether or not the SOC of the battery 32 is a prescribed lower limit value of the SOC. The threshold value Bth1 is an example of a "first threshold value" in the claims. When the power Bp is not less than or equal to the threshold value Bth1, the process returns to the processing of step S100. When the power Bp is less than or equal to the threshold value Bth1, the control device 100 causes the GT 60-2, which has been stopped, to be operated within the efficient operating range (step S310). According to the processing of step S310, the power Bp is controlled so that the power Bp does not fall below the threshold value Bth1. Thereby, the process of one routine of the present flowchart ends.

As described above, the control device 100 supplies power so that the power requirement is satisfied in the first state and further controls the GT 60 so that the power of the battery 32 is not less than or equal to the threshold value Bth1. Thereby, it is possible to improve power generation efficiency and maintain a state in which sufficient power is stored in the battery 32.

### [Flowchart (process after takeoff and before landing/Part 2)]

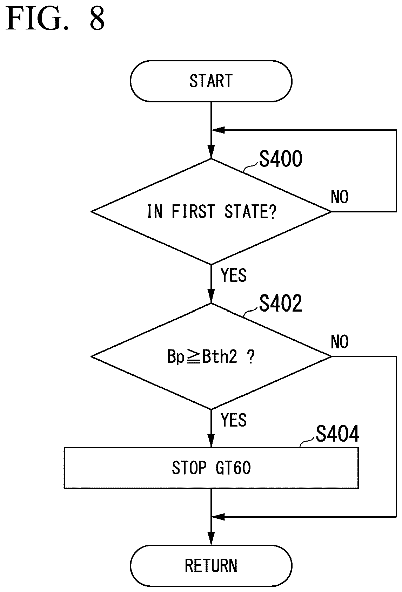

FIG. 8 is a flowchart (Part 2) showing an example of a flow of a process executed by the aircraft 1 after takeoff and before landing.

First, the control device 100 determines whether or not the state is the first state (step S400). In the first state, the control device 100 determines whether or not the power Bp is greater than or equal to a threshold value Bth2 (step S402). The threshold value Bth2 is an upper limit value of the power to be stored in the battery 32. The threshold value Bth2 is, for example, an upper limit value of the SOC. The threshold value Bth2 is an example of a "second threshold value" in the claims. When the power Bp is not greater than or equal to the threshold value Bth2, the process of one routine of the present flowchart ends. When the power Bp is greater than or equal to the threshold value Bth2, the control device 100 causes the GT 60 in operation to be stopped (step S404). When the GT 60-1 and the GT 60-2 are in operation, the control device 100 stops the operations of the GT 60-1 and the GT 60-2. When the GT 60-1 is in operation, the control device 100 causes the operation of the GT 60-1 to be stopped. According to the processing of step S404, the power Bp is controlled so that the power Bp does not exceed the threshold value Bth2. Thereby, the process of one routine of the present flowchart ends.

As described above, the control device 100 controls the GT 60 so that the power of the battery 32 does not exceed the threshold value Bth2 according to the operation of the GT 60 in the first state. Thereby, it is possible to improve power generation efficiency and limit the excessive supply of power to the battery 32.

### [Timing chart]

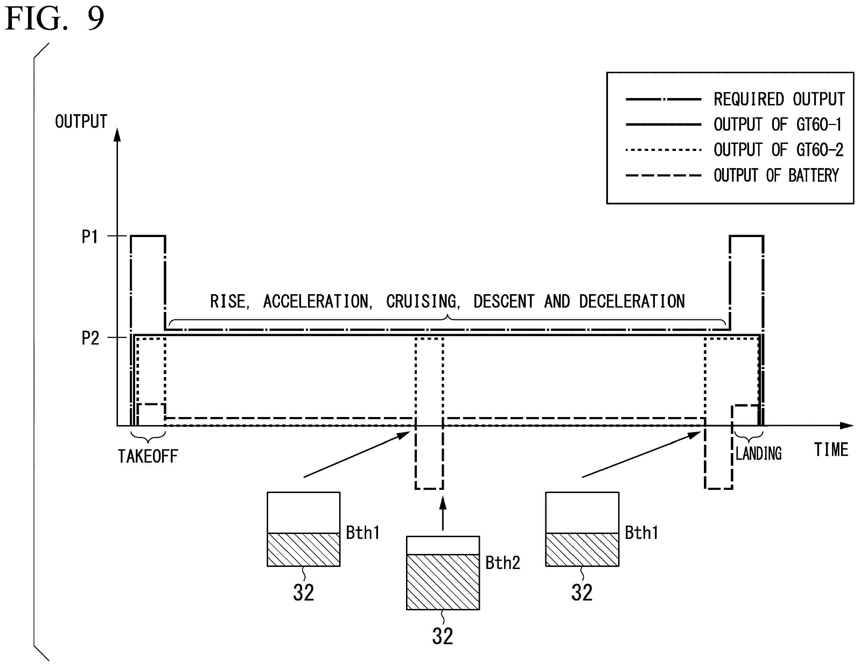

FIG. 9 is a diagram showing an example of changes in an operating state of the GT 60 and the required output (for example, the required power) from the time when the aircraft 1 takes off to the time when the aircraft 1 lands. The vertical axis in FIG. 9 represents an output (power) and the horizontal axis in FIG. 9 represents time. A hatched portion of the battery 32 in FIG. 9 represents power stored in the battery 32. At the time of takeoff, the control device 100 causes the GT 60-1 and the GT 60-2 to be operated. An output P1 required at the time of takeoff is covered by an output (power) obtained by combining outputs of the GT 60-1 and the GT 60-2 (power of the GT 60-1 and the GT 60-2) and an output (power) supplied to the battery 32. After takeoff, the control device 100 maintains the operation of the GT 60-1 and causes the operation of the GT 60-2 to be stopped. An output P2 required after takeoff is covered by the output from the operation of the GT 60-1 (or the output of the battery 32 when the output is insufficient).

For example, if the power Bp stored in the battery 32 is less than the threshold value Bth1 because the power of the battery 32 has been consumed due to the use of an auxiliary machine or the like provided in the aircraft 1 or power is insufficient even with the GT 60-1 in operation, the control device 100 causes the GT 60-2 to be operated and causes the battery 32 to store power, which has been generated. A state in which the output of the battery 32 in FIG. 9 is lower than the horizontal axis and is negative is a state in which storage (charging) is performed. When the power Bp stored in the battery 32 has reached the threshold value Bth2, the control device 100 stops the operation of the GT 60-2 (or the operations of the GT 60-1 and the GT 60-2).

At the time of landing, the control device 100 causes the GT 60-1 and the GT 60-2 to be operated. The required power P1 required for the time of landing is covered by power obtained by combining power generated by the GT 60-1 and the GT 60-2 and power supplied by the battery 32.

As described above, the control device 100 controls the GT 60 in accordance with the required power and the amount of power stored in the battery. Thereby, it is possible to improve power generation efficiency while maintaining a desired flight state.

### [Comparison between aircraft with fixed wings and aircraft with rotary wings]

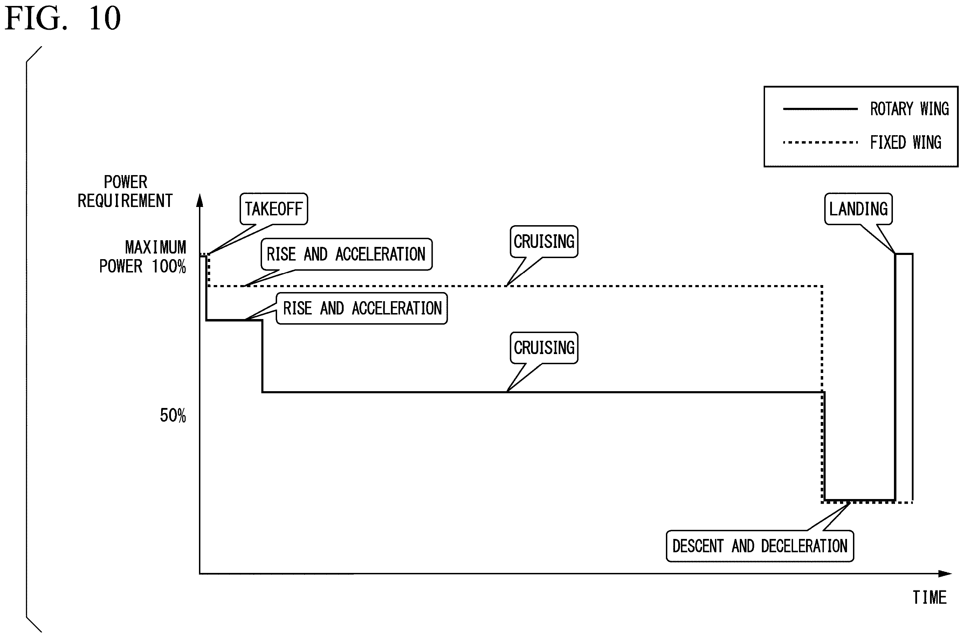

FIG. 10 is a diagram for comparing power required for a flight state of an aircraft having fixed wings with power required for a flight state of an aircraft having rotary wings. The vertical axis in FIG. 10 represents an index of power required for a flight and the horizontal axis in FIG. 10 represents time. In the example of FIG. 10, a force required for a flight at the time of takeoff is set to 100. For example, when the aircraft 1 has two GTs 60, the power output by the two GTs 60 at nearly 100% is set to 100.

In the fixed-wing aircraft, a difference between a force required for a flight at the time of takeoff and a force required for a flight at the time of cruising is small and a force required for a flight at the time of cruising is slightly less than 100. On the other hand, in the rotary-wing aircraft, a force required for a flight at the time of takeoff or landing is close to 100, but a force required for a flight at the time of cruising is about 50.

In this way, although the aircraft 1 with rotary wings requires a force of nearly 100 for a flight of a short time period of takeoff and landing, a force of about 50 is required for, for example, a relatively long time period of cruising. Thus, at the time of cruising, it is necessary to perform more appropriate power management with respect to the operation of the GT 60 so that a high-efficient operation is performed.

In the present embodiment, as described above, the control device 100 appropriately controls the GT 60 at the time of cruising, thereby improving the power generation efficiency.

Although the aircraft propulsion system having two GTs 60 has been described in the first embodiment, the aircraft propulsion system may be a system having three or more GTs 60 instead thereof. In this case, when the flight state of the aircraft 1 is the first state after a plurality of GTs 60 operate and the aircraft 1 takes off, the aircraft propulsion system causes a prescribed number of GTs 60 to be operated and causes the operations of other GTs 60 to be stopped so that the power requirement is satisfied.

According to the first embodiment described above, under the assumption that the aircraft 1 has a plurality of GTs 60, when a flight state of the aircraft 1 is the first state after the plurality of GTs 60 operate and the aircraft takes off, the control device 100 causes at least one GT 60 among the plurality of GTs 60 to be stopped, causes another GT 60, which has not been stopped, to be operated in an operating range in which the other GT 60 is able to operate efficiently, and causes the generator 50 corresponding to the other GT 60 to output the power. Thereby, it is possible to improve power generation efficiency.

### <Second embodiment>

Hereinafter, a second embodiment will be described. When a flight state of an aircraft 1 is a first state after a plurality of GTs 60 operate and the aircraft 1 takes off, a control device 100 of the second embodiment causes the GT 60 to be operated in an operating range in which the GT 60, which has been preset, is able to operate efficiently, causes a motor 14 to be operated with power generated according to an operation of the GT 60, and causes a battery 32 to store surplus power unused in an operation of the motor 14 within the above power. Subsequently, the control device 100 causes the GT 60 in operation to be stopped when the power stored in the battery 32 has reached a predetermined upper limit. A process of the second embodiment is executed in combination with the process of the first embodiment.

### [Flowchart]

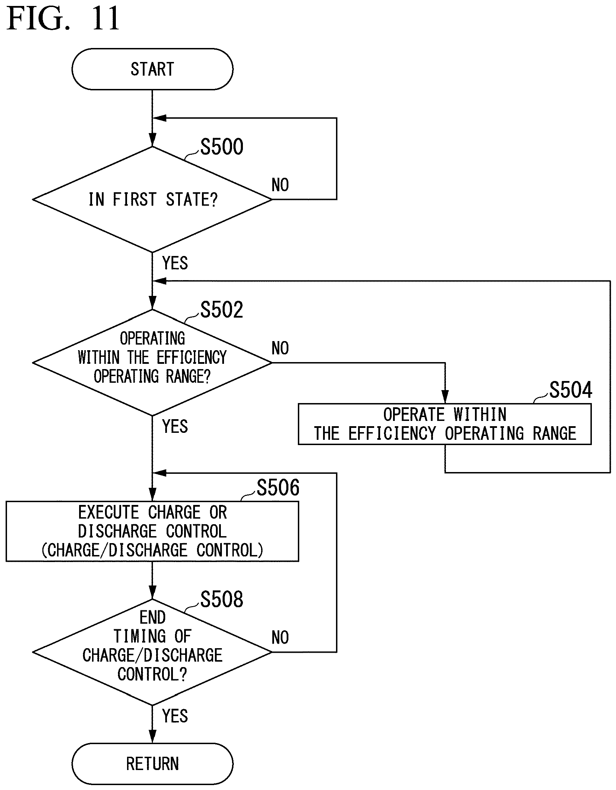

FIG. 11 is a flowchart showing an example of a flow of a process executed by the control device 100 of the second embodiment. First, the control device 100 determines whether or not the state is the first state (step S500). In the first state, the control device 100 determines whether or not a GT 60-1 and a GT 60-2 are in operation within an efficient operating range (step S502). When the GT 60-1 and the GT 60-2 are not in operation within the efficient operating range, the control device 100 causes the GT 60-1 and the GT 60-2 to be operated within the efficient operating range (step S504).

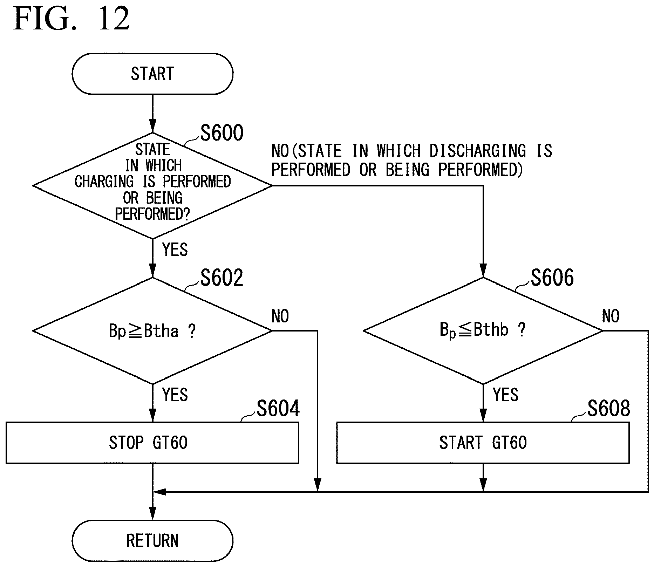

When the GT 60-1 is in operation within the efficient operating range or after the processing of step S504, the control device 100 executes control of charging or discharging (charging/discharging control) (step S506). Details of the charging/discharging control will be described with reference to FIG. 12, which will be described below. Next, the control device 100 determines whether or not the timing is a charging/discharging control end timing (step S508). The end timing is, for example, a timing when the control device 100 has acquired a control signal indicating that the aircraft 1 is scheduled to land. When the timing is not the charging/discharging control end timing, the process returns to the processing of step S506. When the timing is the charging/discharging control end timing, the process of one routine of the present flowchart ends.

### [Flowchart]

FIG. 12 is a flowchart showing another example of the flow of the process executed by the control device 100 of the second embodiment. The present flowchart shows the charging/discharging control process in step S506 of FIG. 11 described above. First, the control device 100 determines whether or not the state is a state in which charging is performed or being performed (step S600). The state in which charging is performed is a state in which the power generated by the GT 60-1 and the GT 60-2 is greater than required power and surplus power is stored in the battery 32.

In the state in which the charging is performed or the state in which the charging is being performed, the control device 100 determines whether or not power Bp stored in the battery 32 is greater than or equal to a threshold value Btha (step S602). When the power Bp is greater than or equal to the threshold value Btha, the control device 100 causes the operations of the GT 60-1 and the GT 60-2 to be stopped (step S604). The threshold value Btha is an upper limit value of power to be stored in the battery 32 (for example, an upper limit value of the SOC). The threshold Btha is an example of a "third threshold value" or a "fifth threshold value" in the claims.

When the state is not the state in which the charging is performed or the state in which the charging is being performed (when the state is a state in which discharging is performed or the state in which discharging is being performed), the control device 100 determines whether or not the power Bp is less than or equal to a threshold value Bthb (step S606). The threshold Bthb is an example of a "fourth threshold value" in the claims. The threshold value Bthb is a lower limit value of power to be stored in the battery 32 (for example, a lower limit value of the SOC). When the power Bp is less than or equal to the threshold value Bthb, the control device 100 causes the GT 60-1 and the GT 60-2 to be operated within the efficient operating range (step S608). When GT 60-1 and GT 60-2 are in operation within the efficient operating range in step S608, the control device 100 maintains this state. Thereby, the process of one routine of the present flowchart ends.

As described above, the control device 100 of the second embodiment performs charging/discharging control in the first state. Thereby, it is possible to improve power generation efficiency.

### [Timing chart]

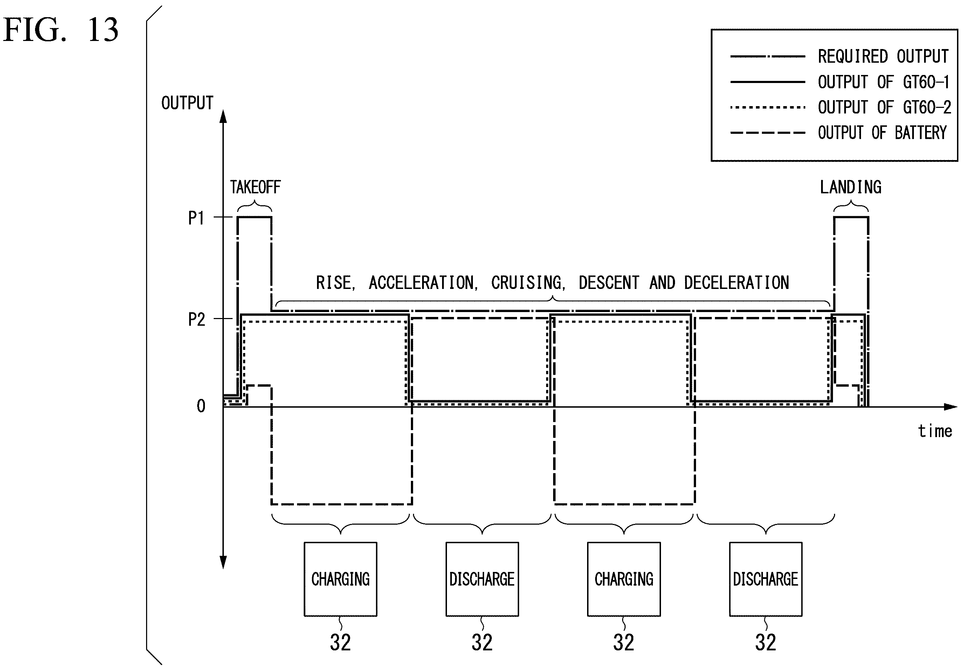

FIG. 13 is a diagram showing an example of changes in an operating state of the GT 60 and a required output (for example, required power) from the time the aircraft 1 takes off to the time the aircraft 1 lands. The vertical axis in FIG. 13 represents an output (power) and the horizontal axis in FIG. 13 represents time. At the time of takeoff, the control device 100 causes the GT 60-1 and the GT 60-2 to be operated within the efficient operating range. An output P1 required at the time of takeoff is covered by an output obtained by combining the outputs of the GT 60-1 and the GT 60-2 and the output of the battery 32. After takeoff, the battery is charged with surplus power of power based on the outputs of the GT 60-1 and the GT 60-2. The surplus power is power exceeding the required power within the power generated by the GT 60-1 or the GT 60-2.

When the power Bp becomes greater than or equal to the threshold value Btha, the control device 100 stops the operations of the GT 60-1 and the GT 60-2. Subsequently, the control device 100 supplies the power of the battery 32 to the motor 14 and causes the rotor 12 to rotate. When the power Bp becomes less than or equal to the threshold value Bthb, the control device 100 causes the GT 60-1 and the GT 60-2 to be operated within the efficient operating range and causes the battery 32 to store the surplus power.

At the time of landing, the control device 100 causes the GT 60-1 and the GT 60-2 to be operated. The required power required at the time of landing is covered by power based on an output by combining the outputs of the GT 60-1 and the GT 60-2 and the output supplied by the battery 32.

As described above, the control device 100 can cause the GT 60 to be operated within the efficient operating range and can more appropriately use the power stored in the battery 32. Thereby, it is possible to use power more efficiently while improving power generation efficiency.

Although the aircraft propulsion system having two GTs 60 has been described as in the second embodiment, in an embodiment not according to the claims, the aircraft propulsion system may be a system having one GT 60 instead thereof. In this case, likewise, the aircraft propulsion system causes the GT 60 to be operated or causes the operation of the GT 60 to be stopped based on a relationship between the power Bp and the threshold value. That is, the process of the second embodiment may be applied to an aircraft having a plurality of GT 60s or may be applied to an aircraft having one GT 60.

According to the second embodiment described above, when the flight state of the aircraft 1 is the first state after the plurality of GTs 60 operate and the aircraft 1 takes off, the control device 100 causes the GT 60 to be operated in an operating range in which the GT 60, which has been preset, is able to operate efficiently, causes the motor 14 to be operated with power generated according to an operation of the GT 60, and causes the battery 32 to store surplus power unused in an operation of the motor 14 within the above power. Subsequently, when the power stored in the battery 32 has reached a predetermined upper limit, the GT 60 in operation is stopped. Thereby, it is possible to improve power generation efficiency.

While preferred embodiments of the invention have been described and illustrated above, it should be understood that these are exemplary of the invention and are not to be considered as limiting. Additions, omissions, substitutions, and other modifications can be made without departing from the scope of the present claims. Accordingly, the invention is not to be considered as being limited by the foregoing description, and is only limited by the scope of the appended claims

### EXPLANATION OF REFERENCES

1 Aircraft
10 Aircraft body
12 Rotor
14 Motor
16 Arm
20 First control circuit
30 Battery unit
32 Battery
34 Battery management unit (BMU)
36 Detecting part
40 Second control circuit
50 Generator
60 Gas turbine engine (GT)
100 Control device
120 Various types of sensors

## Claims

1. A multicopter (1) equipped with an aircraft propulsion system comprising:
a plurality of engines (60-1, 60-2) attached to an aircraft body (10) of the multicopter (1);
generators (50-1, 50-2) connected to respective engine shafts of each of the engines (60-1, 60-2);
a battery (32) configured to store power generated by the generators (50-1, 50-2);
a plurality of motors (14) driven by the power supplied from the generators (50-1, 50-2) or the battery (32);
a plurality of rotors (12) attached to the aircraft body (10) of the multicopter (1) via respective arms (16) and driven by driving forces output from the motors (14) attached to a respective rotating shaft of the rotors (12) and
a controller (100) configured to control operating states of the plurality of engines (60),
wherein, when a flight state of the multicopter (1) is a first state after the plurality of engines (60-1, 60-2) operate and the multicopter (1) has taken off, the controller (100) causes at least one engine (60-2) among the plurality of engines to be stopped, causes another engine (60-1), which has not been stopped, to be operated in an efficient operating range (R) in which the output power of the other engine (60-1) starts at around 60% and ends at a value of about 95% or 100% of its maximum rated power, and causes the generator (50-1) corresponding to the other engine (60-1) to output power.

2. The multicopter according to claim 1, wherein the first state is a state in which the multicopter (1) moves in directions including a horizontal direction after reaching a prescribed altitude.

3. The multicopter according to claim 1 or 2, wherein the control unit (100) controls the multicopter (1) by causing the plurality of engines (60-1, 60-2) to be operated when the flight state of the multicopter (1) is a second state different from the first state.

4. The multicopter according to any one of claims 1 to 3, wherein required power required for the first state is power less than or equal to power capable of being output by the generator (50-1) corresponding to the other engine (60-1) in a state in which the other engine operates in the operating range (R).

5. The multicopter according to any one of claims 1 to 3,
wherein, when power output by the generator (50-1) corresponding to the other engine (60-1) exceeds the required power required for the first state, the battery (32) stores power exceeding the required power, so that an amount of power of the battery (32) increases, and
wherein, when power output by the generator (50-1) corresponding to the other engine (60-1) is less than the required power required for the first state, the battery (32) compensates for a difference in power between the required power and the power output by the generator (50-1) with prestored power and supplies the required power to the motors (14), so that an amount of power of the battery (32) decreases.

6. The multicopter according to claim 5, further comprising a detecting part (36) configured to detect an amount of power stored in the battery,
wherein the controller (100)
causes the motors (14) to be operated based on the power generated by the generator (50-1, 50-2) and the power stored in the battery (32) when the power output by the generator corresponding to the other engine (60-1) is less than the required power, and
subsequently causes the engine (60-2), which has been stopped, to be restarted when it is determined that the amount of power stored in the battery (32) is less than or equal to a first threshold value based on a result of the detecting part (36) to cause the engine (60-2) to be operated in an operating range, which has been preset and in which the engine is able to operate efficiently, so that the power generated by the generator corresponding to the engine is supplied to the battery.

7. The multicopter according to claim 5, further comprising a detecting part (36) configured to detect an amount of power stored in the battery (32),
wherein the controller (100)
causes power exceeding the required power to be stored in the battery (32) when the power output by the generator (50-1) corresponding to the other engine (60-1) exceeds the required power, and
subsequently causes an operation of the other engine (60-1) to be stopped when it is determined that the amount of power stored in the battery (32) exceeds a second threshold value based on a result of the detecting part (36).

## Patentansprüche

1. Multikopter (1), der mit einem Luftfahrzeug-Antriebssystem ausgestattet ist, umfassend:
mehrere Verbrennungsmotoren (60-1, 60-2), die an einem Luftfahrzeugkörper (10) des Multikopters (1) angebracht sind;
Generatoren (50-1, 50-2), die mit jeweiligen Motorwellen jedes der Verbrennungsmotoren (60-1, 60-2) verbunden sind;
eine Batterie (32), die konfiguriert ist, um von den Generatoren (50-1, 50-2) erzeugte Energie zu speichern;
mehrere Elektromotoren (14), die durch die von den Generatoren (50-1, 50-2) oder der Batterie (32) gelieferte Energie angetrieben werden;
mehrere Rotoren (12), die an dem Luftfahrzeugkörper (10) des Multikopters (1) über jeweilige Arme (16) angebracht sind und durch Antriebskräfte angetrieben werden, die von den an jeweiligen Drehwellen der Rotoren (12) angebrachten Elektromotoren (14) ausgegeben werden, und
ein Steuergerät (100), das konfiguriert ist, um Betriebszustände der mehreren Verbrennungsmotoren (60) zu steuern,
wobei, wenn ein Flugzustand des Multikopters (1) in einem ersten Zustand ist, nachdem die mehreren Verbrennungsmotoren (60-1, 60-2) arbeiten und der Multikopter (1) abgehoben hat, das Steuergerät (100) veranlasst, dass zumindest ein Verbrennungsmotor (60-2) unter den mehreren Verbrennungsmotoren gestoppt wird, veranlasst, dass ein anderer Verbrennungsmotor (60-1), der nicht gestoppt worden ist, in einem effizienten Betriebsbereich (R) betrieben wird, in dem die Ausgangsleistung des anderen Verbrennungsmotors (60-1) bei etwa 60 % beginnt und bei einem Wert von etwa 95 % oder 100 % seiner maximalen Nennleistung endet, und veranlasst, dass der dem anderen Verbrennungsmotor (60-1) entsprechende Generator (50-1) Energie ausgibt.

2. Der Multikopter nach Anspruch 1, wobei der erste Zustand ein Zustand ist, in dem sich der Multikopter (1) in Richtungen bewegt, welche eine horizontale Richtung enthalten, nachdem eine vorbestimmte Höhe erreicht ist.

3. Der Multikopter nach Anspruch 1 oder 2, wobei die Steuereinheit (100) den Multikopter (1) steuert, indem sie veranlasst, dass die mehreren Verbrennungsmotoren (60-1, 60-2) betrieben werden, wenn der Flugzustand des Multikopters (1) ein von dem ersten Zustand verschiedener zweiter Zustand ist.

4. Der Multikopter nach einem der Ansprüche 1 bis 3, wobei in einem Zustand, in dem der andere Verbrennungsmotor in dem Betriebsbereich (R) arbeitet, die für den ersten Zustand erforderliche Energie Energie ist, die kleiner als oder gleich der Energie ist, die von dem dem anderen Verbrennungsmotor (60-1) entsprechenden Generator (50-1) ausgegeben werden kann.

5. Der Multikopter nach einem der Ansprüche 1 bis 3,
wobei, wenn die von dem dem anderen Verbrennungsmotor (60-1) entsprechenden Generator (50-1) ausgegebene Energie die für den ersten Zustand erforderliche Energie überschreitet, die Batterie (32) die die erforderliche Energie überschreitende Energie speichert, sodass die Energiemenge der Batterie (32) zunimmt, und
wobei, wenn die von dem dem anderen Verbrennungsmotor (60-1) entsprechenden Generator (50-1) ausgegebene Energie kleiner als die für den ersten Zustand erforderliche Energie ist, die Batterie (32) eine Energiedifferenz zwischen der erforderlichen Energie und der vom Generator (50-1) ausgegebenen Energie mit vorgespeicherter Energie kompensiert und die erforderliche Energie den Elektromotoren (14) zuführt, sodass eine Energiemenge der Batterie (32) abnimmt.

6. Der Multikopter nach Anspruch 5, der ferner ein Detektionsteil (36) aufweist, das konfiguriert ist, um eine in der Batterie gespeicherte Energiemenge zu detektieren,
wobei das Steuergerät (100)
veranlasst, dass die Elektromotoren (14) basierend auf der vom Generator (50-1, 50-2) erzeugten Energie und der in der Batterie (32) gespeicherten Energie arbeiten, wenn die von dem dem anderen Verbrennungsmotor (60-1) entsprechenden Generator ausgegebene Energie kleiner als die erforderliche Energie ist, und
anschließend veranlasst, dass der Verbrennungsmotor (60-2), der gestoppt worden ist, wieder angelassen wird, wenn, basierend auf einem Ergebnis des Detektionsteils (36), bestimmt wird, dass die in der Batterie (32) gespeicherte Energiemenge kleiner als oder gleich einem ersten Schwellenwert ist, um zu veranlassen, dass der Verbrennungsmotor (60-2) in einem Betriebsbereich arbeitet, der voreingestellt worden ist und in dem der Verbrennungsmotor zum effizienten Betrieb in der Lage ist, sodass die von dem dem Verbrennungsmotor entsprechenden Generator erzeugte Energie der Batterie zugeführt wird.

7. Der Multikopter nach Anspruch 5, der ferner ein Detektionsteil (36) aufweist, das konfiguriert ist, um eine in der Batterie (32) gespeicherte Energiemenge zu detektieren,
wobei das Steuergerät (100)
veranlasst, dass die die erforderliche Energie überschreitende Energie in der Batterie (32) gespeichert wird, wenn die von dem dem anderen Verbrennungsmotor (60-1) entsprechenden Generator (50-1) ausgegebene Energie die erforderliche Energie überschreitet, und
anschließend veranlasst, dass ein Betrieb des anderen Verbrennungsmotors (60-1) gestoppt wird, wenn basierend auf einem Ergebnis des Detektionsteils (36) bestimmt wird, dass die in der Batterie (32) gespeicherte Energiemenge einen zweiten Schwellenwert überschreitet.

## Revendications

1. Multicoptère (1) équipé d'un système de propulsion d'aéronef comprenant :
une pluralité de moteurs (60-1, 60-2) fixés à un corps d'aéronef (10) du multicoptère (1) ;
des générateurs (50-1, 50-2) reliés à des arbres de moteur respectifs de chacun des moteurs (60-1, 60-2) ;
une batterie (32) configurée pour stocker de l'énergie générée par les générateurs (50-1, 50-2)
une pluralité de moteurs (14) entraînés par l'énergie fournie par les générateurs (50-1, 50-2) ou la batterie (32) ;
une pluralité de rotors (12) fixés au corps d'aéronef (10) du multicoptère (1) par le biais de bras (16) respectifs et entraînés par des forces d'entraînement produites par les moteurs (14) fixés à un arbre rotatif respectif des rotors (12) et
un dispositif de commande (100) configuré pour commander des états de fonctionnement de la pluralité de moteurs (60),
dans lequel, lorsqu'un état de vol du multicoptère (1) est un premier état après le fonctionnement de la pluralité de moteurs (60-1, 60-2) et le décollage du multicoptère (1), le dispositif de commande (100) amène au moins un moteur (60-2) parmi la pluralité de moteurs à être arrêté, amène un autre moteur (60-1), qui n'a pas été arrêté, à être mis en fonctionnement dans une plage de fonctionnement (R) efficace dans laquelle la puissance de sortie de l'autre moteur (60-1) commence à environ 60 % et finit à une valeur d'environ 95 % ou 100 % de sa puissance nominale maximale, et entraîne le générateur (50-1) correspondant à l'autre moteur (60-1) à produire de l'énergie.

2. Multicoptère selon la revendication 1, dans lequel le premier état est un état dans lequel le multicoptère (1) se déplace dans des directions comprenant une direction horizontale après avoir atteint une altitude prescrite.

3. Multicoptère selon la revendication 1 ou 2, dans lequel le dispositif de commande (100) commande le multicoptère (1) en amenant la pluralité de moteurs (60-1, 60-2) à être mis en fonctionnement lorsque l'état de vol du multicoptère (1) est un deuxième état différent du premier état.

4. Multicoptère selon l'une quelconque des revendications 1 à 3, dans lequel une énergie requise pour le premier état est une énergie inférieure ou égale à une énergie apte à être produite par le générateur (50-1) correspondant à l'autre moteur (60-1) dans un état dans lequel l'autre moteur fonctionne dans la plage de fonctionnement (R).

5. Multicoptère selon l'une quelconque des revendications 1 à 3,
dans lequel, lorsque l'énergie produite par le générateur (50-1) correspondant à l'autre moteur (60-1) excède l'énergie requise pour le premier état, la batterie (32) stocke de l'énergie qui excède l'énergie requise, de sorte qu'une quantité d'énergie de la batterie (32) augmente, et
dans lequel, lorsque l'énergie produite par le générateur (50-1) correspondant à l'autre moteur (60-1) est inférieure à l'énergie requise pour le premier état, la batterie (32) compense une différence d'énergie entre l'énergie requise et l'énergie produite par le générateur (50-1) avec l'énergie préstockée et fournit l'énergie requise aux moteurs (14), de sorte qu'une quantité d'énergie de la batterie (32) diminue.

6. Multicoptère selon la revendication 5, comprenant en outre une partie de détection (36) configurée pour détecter une quantité d'énergie stockée dans la batterie,
dans lequel le dispositif de commande (100)
amène les moteurs (14) à être mis en fonctionnement en fonction de l'énergie générée par le générateur (50-1, 50-2) et de l'énergie stockée dans la batterie (32) lorsque l'énergie produite par le générateur correspondant à l'autre moteur (60-1) est inférieure à l'énergie requise, et
amène ensuite le moteur (60-2), qui a été arrêté, à être redémarré lorsqu'il est déterminé que la quantité d'énergie stockée dans la batterie (32) est inférieure ou égale à une première valeur seuil en fonction d'un résultat de la partie de détection (36) pour amener le moteur (60-2) à être mis en fonctionnement dans une plage de fonctionnement, qui a été prédéfinie et dans laquelle le moteur est apte à fonctionner efficacement, de sorte que l'énergie générée par le générateur correspondant au moteur soit fournie à la batterie.

7. Multicoptère selon la revendication 5, comprenant en outre, une partie de détection (36) configurée pour détecter une quantité d'énergie stockée dans la batterie (32),
dans lequel le dispositif de commande (100)
amène l'énergie excédant l'énergie requise à être stockée dans la batterie (32) lorsque l'énergie produite par le générateur (50-1) correspondant à l'autre moteur (60-1) excède l'énergie requise, et
amène ensuite un fonctionnement de l'autre moteur (60-1) à être arrêté lorsqu'il est déterminé que la quantité d'énergie stockée dans la batterie (32) excède une deuxième valeur seuil en fonction d'un résultat de la partie de détection (36).
